# EUROPEAN PATENT APPLICATION

(11) **EP 4 354 706 A1**
(43) Date of publication of application: **17.04.2024**
(21) Application number: 23202050.3
(22) Date of filing: 06.10.2023
(51) Int. Cl.: H02K 1/16, H02K 1/276, H02K 21/14, H02K 1/20, H02K 9/19

(54) **ROTARY ELECTRIC MACHINE**

(30) Priority: 11.10.2022 JP 2022163494
(71) Applicant: DENSO CORPORATION, Aichi-pref. 448-8661 (JP)
(72) Inventor: KONDO, Keiji, Kariya-city, Aichi-pref., 448-8661 (JP); TAKEI, Toshihiro, Kariya-city, Aichi-pref., 448-8661 (JP); UMEDA, Atsushi, Kariya-city, Aichi-pref., 448-8661 (JP); KUROZAKI, Hirotaka, Kariya-city, Aichi-pref., 448-8661 (JP)
(74) Representative: Winter, Brandl - Partnerschaft mbB

(57) **Abstract**

A rotary electric machine (100) includes a rotor core (50) and a stator core (10). The rotor core includes a steel plate (501) laminated in an axial direction of a rotation shaft (C1) of a rotor (5). The stator core is provided outside an outer periphery of the rotor core and includes a steel plate (101) laminated in the axial direction. An average plate thickness of the steel plate of the stator core is smaller than an average plate thickness of the steel plate of the rotor core. In the steel plate of the stator core, a plate thickness of a portion (101a) between a predetermined position (P1) and a radially outer edge in a radial direction around the rotation axis is smaller than a plate thickness of a portion (101b) between the predetermined position and a radially inner edge in the radial direction.

## Description

### CROSS REFERENCE TO RELATED APPLICATION

The present application is based on Japanese Patent Application No. 2022-163494 filed on October 11, 2022, the entire disclosure of which is incorporated herein by reference.

### TECHNICAL FIELD

The present invention relates to a rotary electric machine including a stator core and a rotor core which are formed of a laminated steel plate.

### BACKGROUND

Conventionally, there is an electric motor including a rotor core in which a laminated steel plate is laminated in an axial direction of a rotation axis of a rotor and a stator core in which a laminated steel plate is laminated in the axial direction, in which a plate thickness of the laminated steel plate of the rotor core is thicker than a plate thickness of the laminated steel plate of the stator core (see Patent Literature 1). According to the electric motor described in Patent Literature 1, a magnetic flux flowing in the axial direction in the stator core is reduced, a generation of an eddy current is suppressed, and motor efficiency can be improved.

### PRIOR ART LITERATURE

### PATENT LITERATURE

PATENT LITERATURE 1: JP7003267B

### SUMMARY OF THE INVENTION

In recent years, motors (rotary electric machines) have been required to have a smaller size and higher output. As a result, a gap between a rotor core and a stator core has been reduced, and rotation speed of the rotor has been increased. Therefore, the rotor core and the stator core may come into contact with each other due to a variation in press dimensions of steel plates, a deviation in stacking positions, or a distortion of the rotor core due to a centrifugal force during rotation of the rotor. In this case, frictional heat is generated between the rotor core and the stator core due to the rotation of the rotor, and the motor may be overheated and damaged.

Such a situation is not limited to a motor, and is common to a rotary electric machine such as a generator and a motor generator (MG) including a rotor core and a stator core.

The present invention has been made to solve the above issues, and a main object of the present invention is to reduce damage to a rotary electric machine due to frictional heat between a rotor core and a stator core.

A first aspect to address the above-mentioned issue is a rotary electric machine (100) comprising a rotor core (50) and a stator core (10). The rotor core includes a steel plate (501) laminated in an axial direction of a rotation shaft (C1) of a rotor (5). The stator core is provided outside an outer periphery of the rotor core and includes a steel plate (101) laminated in the axial direction. An average plate thickness of the steel plate of the stator core is smaller than an average plate thickness of the steel plate of the rotor core. In the steel plate of the stator core, a plate thickness of a portion (101a) between a predetermined position (P1) and a radially outer edge in a radial direction around the rotation axis is smaller than a plate thickness of a portion (101b) between the predetermined position and a radially inner edge in the radial direction.

According to the above configuration, the rotor core has the steel plate stacked in the axial direction. The stator core is provided outside the outer periphery of the rotor core and has the steel plate stacked in the axial direction. As described above, the rotor core and the stator core may come into contact with each other due to a variation in press dimensions of steel plates, a deviation in stacking positions, or a distortion of the rotor core due to a centrifugal force during rotation of the rotor. In this case, frictional heat is generated between the rotor core and the stator core due to the rotation of the rotor, and the rotary electric machine may be overheated and damaged.

There is a possibility that one of steel plates of the stator core and the rotor core protruding in a radial direction is sandwiched between the other two steel plates in the axial direction when the plate thickness of the steel plate of the stator core and the plate thickness of the steel plate of the rotor core are the same. In this case, a contact area between the steel sheets increases, and a frictional heat quantity may increase. Contrary to this, since the average plate thickness of the steel plates of the stator core is smaller than the average plate thickness of the steel plates of the rotor core, a state in which one steel plate protruding in the radial direction is sandwiched between the other two steel plates in the axial direction can be reduced. Therefore, a contact area when the steel plates of the rotor core and the steel plates of the stator core come into contact with each other can be reduced, and an increase in the frictional heat amount can be reduced.

Further, in the steel plate of the stator core, a plate thickness of a portion between a predetermined position and a radially outer edge in the radial direction perpendicular to the axial direction is smaller than a plate thickness of a portion between the predetermined position and a radially inner edge in the radial direction. Therefore, in the portion in the steel sheets of the stator core from the predetermined position P1 to the radially outer edge in the radial direction, a surface area can be increased by defining a gap between the steel sheets. Therefore, the portion from the predetermined position to the radially outer edge in the radial direction in the steel plate of the stator core can function like a heat dissipation fin, and the frictional heat can be efficiently dissipated. In particular, since the average plate thickness of the steel plate of the stator core is smaller than the average plate thickness of the steel plate of the rotor core, the surface area of the steel plate of the stator core can be increased as compared to a case where a magnitude relationship of the average plate thickness is opposite. As described above, damage to the rotary electric machine due to the frictional heat between the rotor core and the stator core can be reduced.

### BRIEF DESCRIPTION OF THE DRAWINGS

FIG. 1 is a cross-sectional view illustrating a motor.
FIG. 2 is a cross-sectional view illustrating a stator core.
FIG. 3 is a vertical cross-sectional view illustrating the motor.
FIG. 4 is a schematic diagram illustrating a shape of a steel plate.
FIG. 5 is a schematic diagram illustrating each steel plate and an insulating layer thereof.
FIG. 6 is a schematic diagram illustrating heat dissipation surfaces of the rotor and a stator.
FIG. 7 is a schematic diagram illustrating the insulating layer of an outer diameter portion of the steel plate of the stator core.
FIG. 8 is a schematic diagram illustrating the rotor, the stator, and a cooling fluid.
FIG. 9A is a schematic diagram illustrating a wear state of the stator core before a rotor core and the stator core come into contact with each other.
FIG. 9B is a schematic diagram illustrating a wear state of the stator core after the rotor core and the stator core come into contact with each other.
FIG. 10A is a schematic diagram illustrating before a cooling jacket is press-fitted to the stator core.
FIG. 10B is a schematic diagram illustrating after the cooling jacket is press-fitted to the stator core.
FIG. 11 is a schematic diagram illustrating a modification of a steel sheet of a stator core.

### DETAILED DESCRIPTION

Hereinafter, an embodiment in which the present disclosure is embodied by a motor mounted on a hybrid vehicle or an electric vehicle will be described below with reference to the drawings.

### < Configuration of Motor >

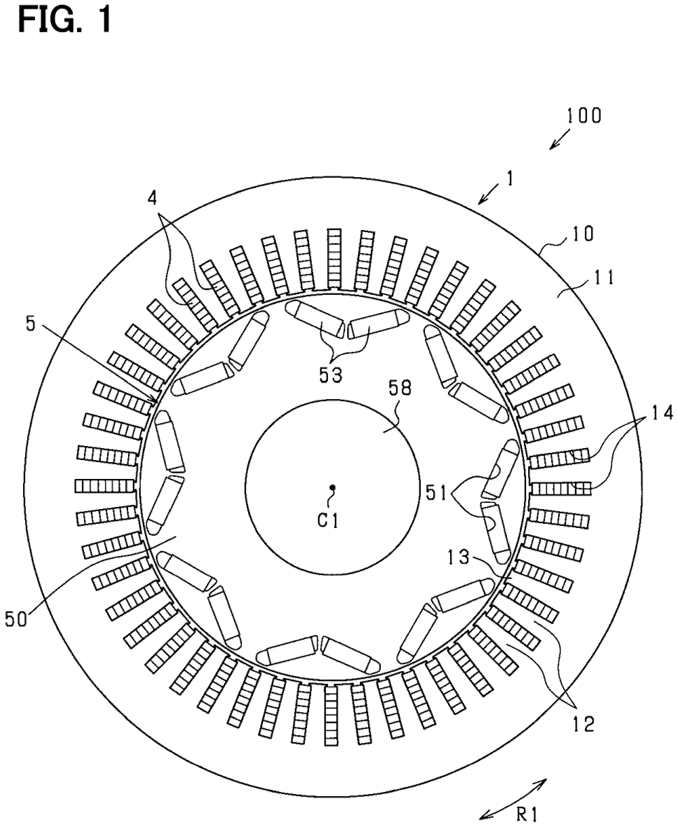

As shown in FIG. 1, the motor 100 is a permanent magnet embedded type motor in which a permanent magnet 53 is embedded in a rotor 5. The motor 100 is referred to as a motor generator or a rotary electric machine.

The motor 100 is of a type called an inner rotor type, and includes a stator 1 and the rotor 5 rotatably provided inside a stator 1. An air gap of, for example, 0.3 to 1.0 mm is defined between the stator 1 and the rotor 5.

Hereinafter, a direction of a central axis C1, which is a rotation axis of the rotor 5, is simply referred to as an "axial direction". A circumferential direction (indicated by an arrow R1 in FIG. 1) around the central axis C1 (hereinafter, it is also referred to as "rotation axis C1") is simply referred to as a "circumferential direction". A radial direction centered on the central axis C1 is simply referred to as a "radial direction". FIG. 1 is a cross-sectional view in a plane perpendicular to the central axis C1.

### < Configuration of Rotor >

The rotor 5 includes a rotor core 50 having a cylindrical shape, permanent magnets 53 embedded in the rotor core 50, and a shaft 58 fixed to a central portion of the rotor core 50.

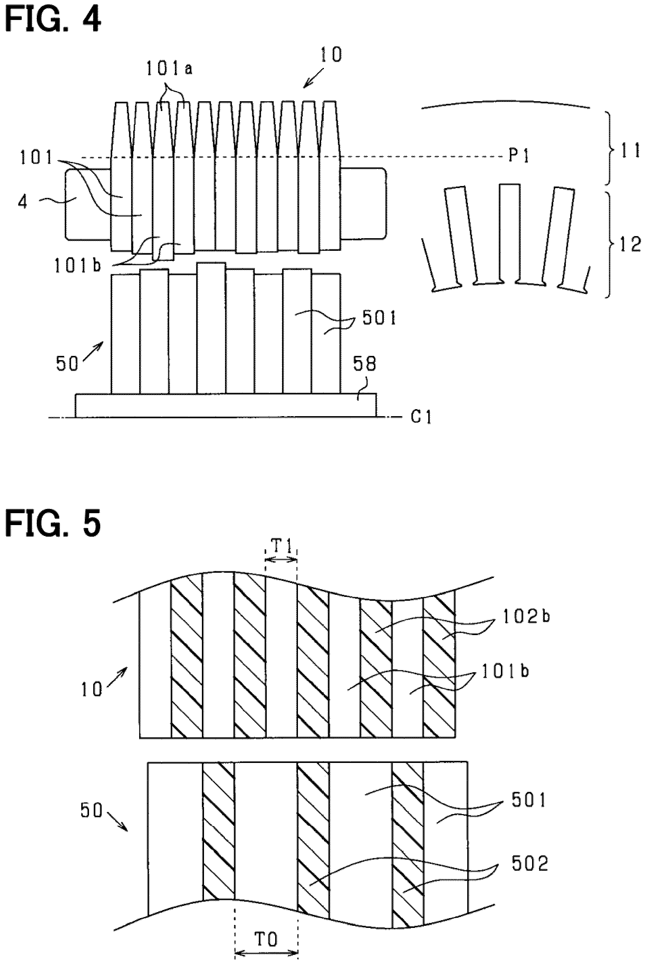

The rotor core 50 is formed by stacking steel plates 501 (see FIG. 4) in the axial direction and integrating the steel plates by a caulking portion or the like. The steel plates 501 are, for example, electromagnetic steel plates. A plate thickness and a lamination gap of the steel sheets 501 will be described later.

Magnet insertion holes 51 into which the permanent magnets 53 are inserted are formed along an outer circumferential surface of the rotor core 50. The magnet insertion holes 51 are a through holes that pass through the rotor core 50 in the axial direction.
Here, the number of magnet insertion holes 51 is 2 per 1 magnetic pole, which is 16 in total. However, the number of magnet insertion holes 51 per magnetic pole is not limited to 2, and may be any number. A gap between the magnet insertion holes 51 of adjacent magnetic poles is a gap between the magnetic poles.

The pair of magnet insertion holes 51 per magnetic pole is formed in a V-shape so that a central portion in the circumferential direction thereof protrudes most toward the central axis C1. In each of the magnet insertion holes 51, a permanent magnet 53 is disposed with a circumferential central portion interposed therebetween. Two permanent magnets 53 of the magnet insertion holes 51 per magnetic pole are magnetized so that the same polarity is directed radially outward, and the adjacent magnetic poles are magnetized so as to have different polarities.

One of the permanent magnets 53 is a flat plate member having a length in the axial direction, and has a width in a longitudinal direction and a thickness in a lateral direction in FIG. 1. The permanent magnets 53 are magnetized in a thickness direction.

Here, one permanent magnet 53 is disposed in each magnet insertion hole 51, but a plurality of permanent magnets 53 may be disposed in each magnet insertion hole 51.

### < Configuration of Stator >

The stator 1 includes a stator core 10 and a coil 4 wound around the stator core 10. The stator core 10 includes a yoke portion 11, which has an annular shape, centered on the central axis C1, and tooth portions 12 extending radially inward from the yoke portion 11 (that is, in a direction toward the central axis C1). A tooth tip portion 13 facing an outer circumferential surface of the rotor 5 is formed at a radially inner end portion of one of the tooth portions 12.

Here, 48 tooth portions 12 are arranged at regular intervals in the circumferential direction, and a slot 14 which is a space for accommodating the coil 4 is formed between the tooth portions 12 adjacent to each other in the circumferential direction.

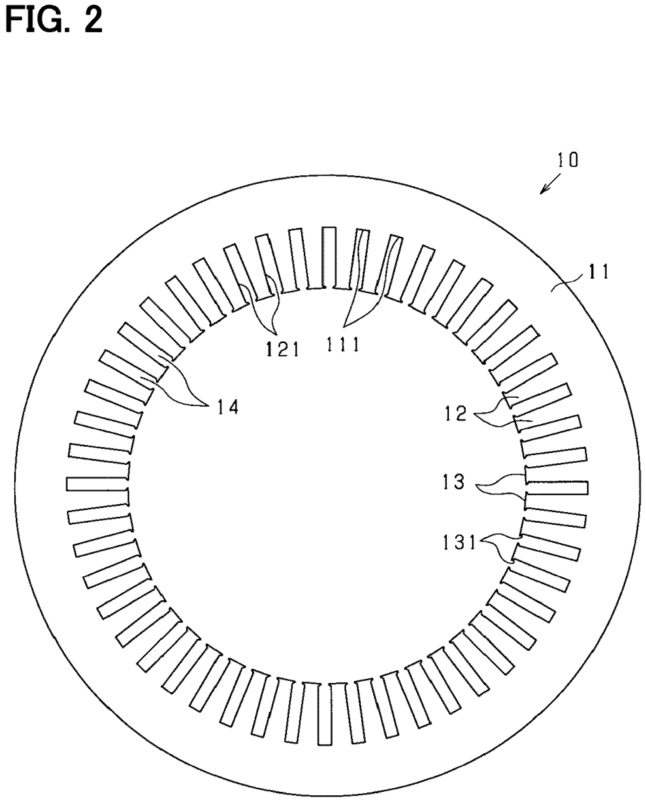

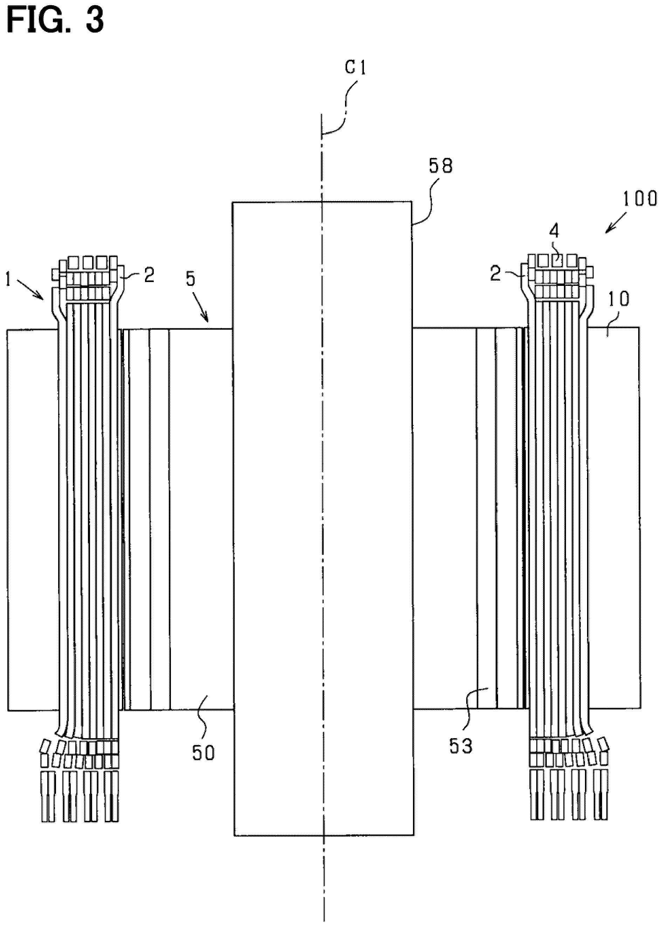

The coil 4 is obtained by winding a magnet wire via an insulator 2 (see FIG. 3). A conductor cross section of the coil 4 has a rectangular shape, and eight coils 4 are respectively inserted into slots 14, and the coils 4 are connected in a 3-phase Y connection. A wire diameter and the number of turns of the coil 4 are determined according to the required rotation speed, torque, applied voltage, or an area of the slot 14. FIG. 2 is a cross-sectional view illustrating the stator core 10. The stator core 10 is formed by stacking steel plates 101 (see FIG. 4) in the axial direction and integrating them by caulking or the like. The steel plate 101 is, for example, an electromagnetic steel plate.

The stator core 10 includes a yoke portion 11 having an annular shape and tooth portions 12 extending radially inward from the yoke portion 11. The tooth portion 12 has a tooth tip portion 13, which is wider than the other portions of the tooth portion 12, at the radially inner end portion thereof.

An inner circumferential surface 111 of the yoke portion 11, a lateral surface 121 of the tooth portion 12, and an outer circumferential surface 131 of the tooth tip portion 13 face the slot 14.

FIG. 3 is a vertical cross-sectional view illustrating the motor 100. As described above, the stator core 10 is formed by stacking the steel plates 101 in the axial direction, and the rotor core 50 is formed by stacking the steel plates 501 in the axial direction.

A plate thickness T0 of the steel plate 501 is constant over the entire region of the rotor core 50 in the axial direction. The plate thickness T0 refers to a thickness of one plate of the steel plates 501. A plate thickness of the steel plate 101 varies in the radial direction as described later, and the plate thickness of the thickest portion is a maximum plate thickness T1.

The plate thickness T0 of the steel plate 501 of the rotor core 50 is larger than the maximum plate thickness T1 of the steel plate 101 of the stator core 10. In other words, the plate thickness T0 of the steel sheet 501 of the rotor core 50 and the maximum plate thickness T1 of the steel sheet 101 of the stator core 10 satisfy the relationship T0 > T1. An average of the plate thicknesses of the steel plates 101 of the stator core 10 is smaller than an average of the plate thicknesses T0 of the steel plates 501 of the rotor core 50.

The plate thickness T0 of the steel plate 501 of the rotor core 50 is, for example, 0.35 mm, and the maximum plate thickness T1 of the steel plate 101 of the stator core 10 is, for example, 0.25 mm. The plate thickness T0 of the steel plate 501 of the rotor core 50 and the maximum plate thickness T1 of the steel plate 101 of the stator core 10 include manufacturing variations within tolerances.

FIG. 4 is a schematic diagram illustrating a shape of the steel plate 501, 101. In the steel sheets 501 of the rotor core 50 and the steel sheets 101 of the stator core 10, variations in positions of radially outer end portions of the steel sheets 501 of the rotor core 50 and variations in positions of radially inner end portions of the steel sheets 101 of the stator core 10 occur due to press variations and lamination deviations.

In the steel plates 101 of the stator core 10, a plate thickness of a portion 101a from a predetermined position P1 to a radially outer edge in the radial direction perpendicular to the axial direction is smaller than a plate thickness of a portion 101b from the predetermined position P1 to a radially inner edge. As a result, a gap is defined between portions 101a of the steel plates 101 from the predetermined position P1 to the radially outer edge. Therefore, the portions 101a of the steel plates 101 function like heat dissipation fins. The predetermined position P1 is included in the yoke portion 11. That is, the plate thickness of the steel plates 101 of the stator core 10 is constant in the tooth portions 12 and changes from a middle in the radial direction in the yoke portion 11. The plate thickness of the portion 101a, from the predetermined position P1 to the radially outer edge of the steel plate 101, of the stator core 10 decreases toward the radially outer edge.

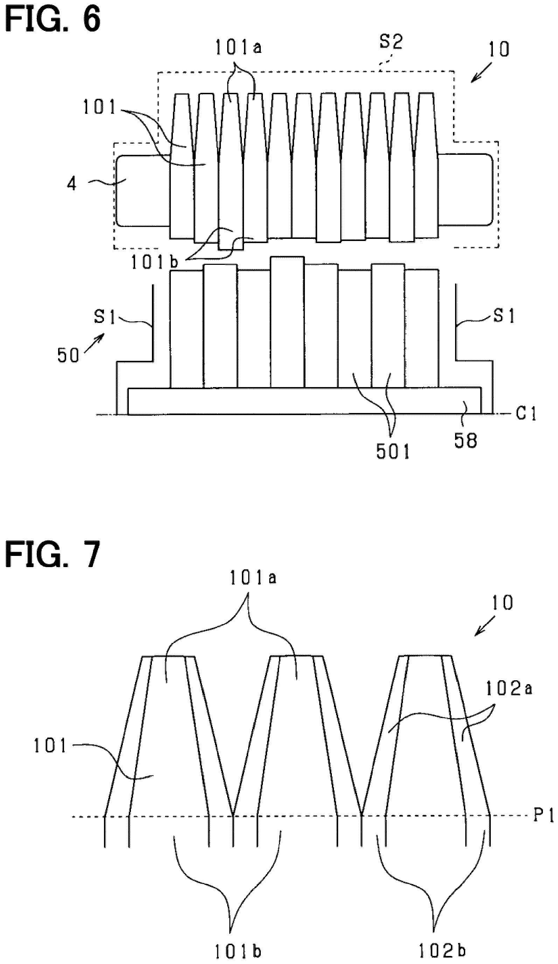

FIG. 5 is a schematic diagram illustrating the steel plates 501, the portions 101b of the steel plates 101, and insulating layers 502 and insulating layers 102b thereof. In FIG. 5, thicknesses of the insulating layers 502, 102b are shown to be thick. for convenience, of illustration. The insulating layers 502 are provided on a plate surface of the steel plate 501 of the rotor core 50 to reduces generation of an eddy current in the rotor core 50 when a magnetic flux enters the rotor core 50 from the radial direction. The insulating layers 102b are provided on a plate surface of the portion 101b of the steel plate 101 of the stator core 10 to reduce generation of an eddy current in the stator core 10 when a magnetic flux enters the stator core 10 from the radial direction. FIG. 6 is a schematic diagram illustrating a heat dissipation surface S1 of the rotor 5 and a heat dissipation surface S2 of the stator 1.

The plate thickness T0 of the steel plate 501 of the rotor core 50 is larger than the maximum plate thickness T1 of the steel plate 101 of the stator core 10. A total thickness of the insulating layers 502 provided in the rotor core 50 is smaller than a total thickness of the insulating layers 102b provided in the stator core 10.

FIG. 7 is a schematic diagram illustrating insulating layers 102a of an outer diameter portion of the steel plate 101 of the stator core 10. The insulating layers 102a are provided on a plate surface of the portion 101a of the steel plate 101 of the stator core 10. A thickness of an insulating layer 102a of the portion 101a of the steel sheet 101 of the stator core 10 from the predetermined position P1 to the radially outer edge is smaller than a thickness of the insulating layer 102b of the portion 101b from the predetermined position P1 to the radially inner edge. Further, the thickness of the insulating layer 102a of the portion 101a is thinner toward the radially outer edge from the predetermined position P1.

Mechanical strength of the steel sheet 101 of the stator core 10 is lower than mechanical strength of the steel sheet 501 of the rotor core 50. The difference in the mechanical strength can be realized by making material of the steel sheet 101 different from material of the steel sheet 501. That is, the mechanical strength of the material of the steel sheet 101 is lower than the mechanical strength of the material of the steel sheet 501.

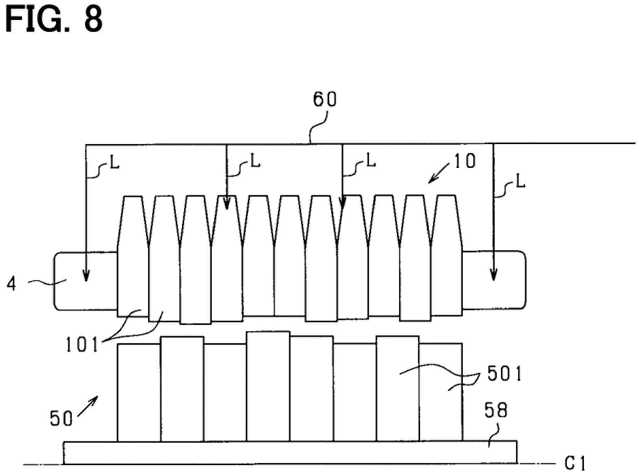

FIG. 8 is a schematic diagram illustrating the stator 1, the rotor 5, and a cooling fluid L. The motor 100 is attached to an outer peripheral surface of the stator core 10 so that the cooling fluid L can flow.
The cooling fluid L may be enclosed in a housing that accommodates the motor body, for example the stator 1 and the rotor 5, or may include a discharge portion 60 to which the cooling fluid L is dropped. The cooling fluid L is, for example, a liquid such as lubricating oil. The discharge portion 60 is formed in, for example, a pipe shape or a tubular shape, and holes are formed at predetermined intervals at positions facing the stator core 10 and the coils 4. Then, by pressurizing the cooling fluid L inside the discharge portion 60, the cooling fluid L is dropped from the holes. As a result, the cooling fluid L is dropped onto the outer peripheral surface of the stator core 10 and the coils 4. The cooling fluid L may flow to the outer peripheral surface of the stator core 10 due to stirring caused by rotation of the rotor 5 or vibration of the vehicle on which the motor 100 is mounted. Alternatively, a gas such as air may be used as the cooling fluid L.

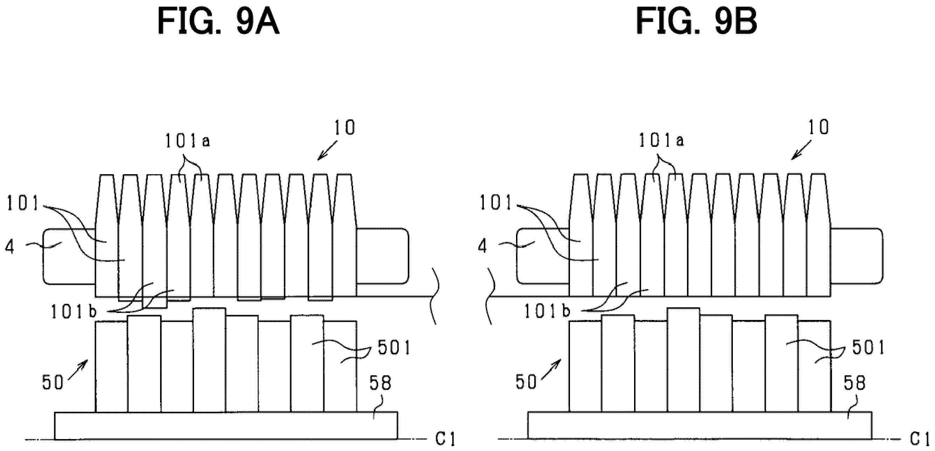

FIGS. 9A, 9B are a schematic diagram illustrating a wear state of the stator core 10. As shown in FIG. 9A, before the rotor core 50 and the stator core 10 come into contact with each other, the radially outer end portions of the rotor core 50 of the steel plate 501 and the radially inner end portions of the stator core 10 of the steel plate 101 vary. The rotor core 50 and the stator core 10 come into contact with each other when the rotor core 50 is strained by centrifugal force during the rotation of the rotor 5. As a result, as shown in FIG. 9B, the steel sheets 101 of the stator core 10 having a lower mechanical strength is worn out between the steel sheets 101 of the stator core 10 and the steel sheets 501 of the rotor core 50.

The present embodiment described above in detail has the following advantages.

Since an average plate thickness of the steel plates 101 of the stator core 10 is smaller than an average plate thickness of the steel plates 501 of the rotor core 50, a state in which one of the steel plates of the stator core 10 and the rotor core 50 protruding in the radial direction is sandwiched between the other two steel plates in the axial direction can be reduced. Therefore, a contact area when the steel plates 501 of the rotor core 50 and the steel plates 101 of the stator core 10 come into contact with each other can be reduced, and an increase in a frictional heat amount can be reduced.

In the steel plates 101 of the stator core 10, the plate thickness of the portion 101a from the predetermined position P1 to the radially outer edge in the radial direction perpendicular to the axial direction is smaller than the plate thickness of the portion 101b from the predetermined position P1 to the radially inner edge. Therefore, in the portion 101a in the steel sheets 101 of the stator core 10 from the predetermined position P1 to the radially outer edge in the radial direction, a surface area can be increased by defining a gap between the steel sheets 101. Therefore, the portion 101a from the predetermined position P1 to the radially outer edge in the radial direction in the steel plate 101 of the stator core 10 can function like a heat dissipation fin, and the frictional heat can be efficiently dissipated. In particular, since the average plate thickness of the steel plate 101 of the stator core 10 is smaller than the average plate thickness of the steel plate 501 of the rotor core 50, the surface area of the steel plate 101 of the stator core 10 can be increased as compared to a case where a magnitude relationship of the average plate thickness is opposite. As described above, damage to the motor 100 due to the frictional heat between the rotor core 50 and the stator core 10 can be reduced.

The stator core 10 includes the yoke portion 11 extending in the circumferential direction and the tooth portions 12 extending from the yoke portion 11 toward the rotation axis C1. The coils 4 are wound around the tooth portions 12, and heat generated in the coils 4 is conducted to the tooth portions 12. Here, the predetermined position P1 is included in the yoke portion 11. Therefore, in the steel plate 101 of the stator core 10, the portion 101a to be thinned can be limited to the yoke portion 11. Therefore, the surface area, which is a heat dissipation area, of the stator core 10 can be increased without inhibiting the heat generated in the coils 4 from being conducted to the tooth portions 12.

Since the insulating layers 102a, 102b are provided on the plate surfaces, which is main surfaces, of the steel plates 101 of the stator core 10, generation of an eddy current in the stator core 10 can be reduced when a magnetic flux enters the stator core 10 from the radial direction. However, since thermal conductivity of the insulating layers 102a, 102b is lower than that of the steel plates 101, heat dissipation from the plate surface may be hindered by the insulating layers 102a, 102b in the portion 101a, hereinafter also referred to as fin portion 101a, from the predetermined position P1 to the radially outer edge of the steel plate 101 of the stator core 10. Regarding this, the thickness of the insulating layer 102a of the portion 101a of the steel sheet 101 of the stator core 10 from the predetermined position P1 to the radially outer edge is smaller than the thickness of the insulating layer 102b of the portion 101b from the predetermined position P1 to the radially inner edge. Therefore, in the fin portion 101a, the heat dissipation from the plate surface from being hindered by the insulating layer 102a can be reduced, and a decrease in heat dissipation can be reduced.

The plate thickness of the portion 101a, from the predetermined position P1 to the radially outer edge of the steel plate 101, of the stator core 10 decreases toward the radially outer edge. According to such a configuration, in the fin portion 101a, the gap between the steel plates 101 can be increased toward the radially outer edge, and the heat dissipation can be improved.

The mechanical strength of the steel sheet 101 of the stator core 10 is lower than the mechanical strength of the steel sheet 501 of the rotor core 50. According to such a configuration, the steel plate 101 of the stator core 10 can be actively worn when the steel plate 501 of the rotor core 50 and the steel plate 101 of the stator core 10 rub against each other. Therefore, a state in which the steel plate 501 of the rotor core 50 and the steel plate 101 of the stator core 10 are in friction with each other can be eliminated in a shorter period of time, and a period in which frictional heat is generated can be shortened. Further, since the permanent magnets 53 are provided inside the rotor core 50, a bridge portion holding the permanent magnets 53 in the rotor core 50 from being damaged can be reduced due to wear of not the rotor core 50 but the stator core 10.

Since the insulating layers 502 are provided on the plate surface of the steel plates 501 of the rotor core 50, generation of an eddy current in the rotor core 50 can be reduced when a magnetic flux enters the rotor core 50 from the radial direction. However, since thermal conductivity of the insulating layers 502 is lower than that of the steel sheet 501, in the rotor core 50, the thermal conduction in the axial direction of the rotation axis may be inhibited by the insulating layers 502, and the heat dissipation from the end surface S1 in the axial direction may decrease. Regarding this, a total thickness of the insulating layers 502 provided in the rotor core 50 is smaller than a total thickness of the insulating layers 102b provided in the stator core 10. Therefore, in the rotor core 50, as compared to the stator core 10, the thermal conduction in the axial direction from being hindered by the insulating layers 502, and a decrease in heat dissipation from the end surface in the axial direction can be reduced.

The motor 100 is arranged in the housing so that the cooling fluid L can flow on the outer peripheral surface of the stator core 10. In addition, the discharge portion 60 for dropping the cooling fluid L onto the stator core 10 and the coil end is provided. Therefore, in the fin portion 101a, the cooling fluid L enters the gap between the steel plates 101, and the heat dissipation of the stator core 10 can be significantly improved.

The total thickness of the insulating layer 502 provided on the steel plate 501 of the rotor core 50 is smaller than the total thickness of the insulating layer 102b provided on the steel plate 101 of the stator core 10. Therefore, in the rotor core 50, as compared to the stator core 10, the thermal conduction in the axial direction from being hindered by the insulating layers 502, and the decrease in the heat dissipation from the end surface in the axial direction can be reduced.

The embodiment described above may be modified in the following manners. Parts identical to the parts of the above embodiment are designated by the same reference signs as the above embodiment to omit redundant description.

The thickness of the insulating layers 102a in the steel plate 101 of the stator core 10 may be constant.

The plate thickness of the portion 101a of the stator core 10 from the predetermined position P1 to the radially outer edge of the steel plate 101 may be constant.

In the steel plate 101 of the stator core 10, a region in which the plate thickness of the portion 101a from the predetermined position P1 to the radially outer edge is smaller than the plate thickness of the portion 101b from the predetermined position P1 to the radially inner edge may not be the entire region in the circumferential direction, but may be a partial region.

By making material of the steel sheet 501 of the rotor core 50 different from material of the steel sheet 101 of the stator core 10, magnetic permeability of the steel sheet 501 of the rotor core 50 can be made higher than magnetic permeability of the steel sheet 101 of the stator core 10. According to such a configuration, a magnet amount of the rotor 5 can be reduced, a core deformation amount due to centrifugal force during the rotation of the rotor 5 can be reduced, and a contact amount between the stator core 10 and the rotor core 50 can be reduced. Therefore, heat generation due to contact can be reduced, and damage due to overheating of the motor 100 can be reduced.

The mechanical strength of the steel sheet 101 of the stator core 10 may be equal to or greater than the mechanical strength of the steel sheet 501 of the rotor core 50.

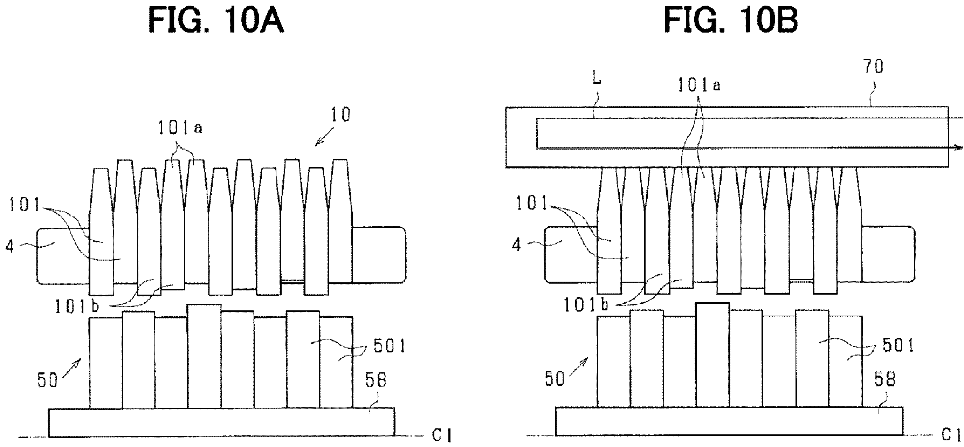

As shown in FIG. 10B, the motor 100 may include a cooling jacket 70 that is press-fitted to an outer periphery of the stator core 10 and includes a flow portion through which the cooling fluid L flows. A flow path of the cooling fluid L is formed in the flow portion. The plate thickness of the fin portion 101a, in the steel plate 101 of the stator core 10, is smaller than the plate thickness of the portion 101b on an inner diameter side of the fin portion 101a. Since the plate thickness of the fin portion 101a is small, rigidity thereof is lower than that of the other portions. Therefore, as shown in FIG. 10B from a state shown in FIG. 10A, when the inner peripheral surface of the cooling jacket 70 is fitted to the outer periphery of the stator core 10, an unevenness of the outer peripheral of the fin portion 101a is deformed by the inner peripheral surface of the cooling jacket 70, and the unevenness is corrected so as to be reduced. Therefore, a contact surface between the fin portion 101a and the cooling jacket 70 is increased, heat conduction can be promoted, and the heat dissipation of the stator core 10 can be remarkably improved.

The thickness of each of the insulating layers 102a, 102b provided on the steel plate 101 of the stator core 10 may be smaller than the thickness of each of the insulating layers 502 provided on the steel plate 501 of the rotor core 50. According to such a configuration, in the stator core 10, thermal conduction in the axial direction can be prevented from being hindered by the insulating layers 102a, 102b as compared to the rotor core 50, and the thermal conduction from a high temperature portion to a low temperature portion of the stator core 10 can be promoted.

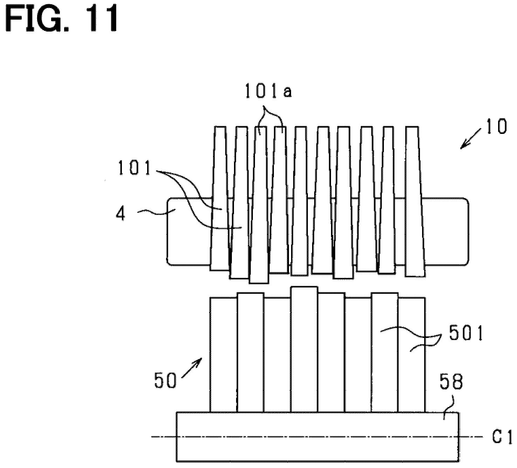

As shown in FIG. 11, the steel plate 101 of the stator core 10 can be made thinner toward the radially outer edge. Even with such a configuration, a gap can be defined between the steel plates 101. Therefore, the steel plate 101 of the stator core 10 can function like a heat dissipation fin, and the frictional heat can be efficiently dissipated. In particular, since the average plate thickness of the steel plate 101 of the stator core 10 is smaller than the average plate thickness of the steel plate 501 of the rotor core 50, the surface area of the steel plate 101 of the stator core 10 can be increased as compared to a case where a magnitude relationship of the average plate thickness is opposite. As described above, damage to the rotary electric machine due to the frictional heat between the rotor core 50 and the stator core 10 can be reduced. In the configuration of FIG. 11, even when a predetermined position P1 is set at an arbitrary position in the radial direction of the steel plate 101, the plate thickness of the portion from the predetermined position P1 to the radially outer edge in the radial direction is smaller than the plate thickness of a portion from the predetermined position P1 to the radially inner edge.

The rotor 5 is not limited to the permanent magnet embedded type and may be a field winding type.

Each of the steel plates 101 of the stator core 10 is not limited to one sheet and a stator core may be a plate connected in a spiral shape. That is, a stator core 10 may be a helical core. Similarly, each of the steel plates 501 of the rotor core 50 is not limited to one sheet and a stator core may be a plate connected in a spiral shape. That is, a rotor core 50 may be a helical core.

The modified examples described above may be implemented in combination.

## Claims

1. A rotary electric machine (100) comprising:
a rotor core (50) including a steel plate (501) laminated in an axial direction of a rotation shaft (C1) of a rotor (5); and
a stator core (10) provided outside an outer periphery of the rotor core and including a steel plate (101) laminated in the axial direction, wherein
an average plate thickness of the steel plate of the stator core is smaller than an average plate thickness of the steel plate of the rotor core, and
in the steel plate of the stator core, a plate thickness of a portion (101a) between a predetermined position (P1) and a radially outer edge in a radial direction around the rotation axis is smaller than a plate thickness of a portion (101b) between the predetermined position and a radially inner edge in the radial direction.

2. The rotary electric machine according to claim 1, wherein
the stator core includes a yoke portion (11) extending in a circumferential direction around the rotation axis, and a tooth portion (12) extending from the yoke portion toward the rotation axis, and
the predetermined position is included in the yoke portion.

3. The rotary electric machine according to claim 1 or 2, wherein
a plate surface of the steel plate of the stator core has an insulating layer (102a, 102b), and
a thickness of the insulating layer (102a) at a portion of the steel sheet of the stator core between the predetermined position and the radially outer edge is smaller than a thickness of the insulating layer (102b) at a portion between the predetermined position and the radially inner edge.

4. The rotary electric machine according to any one of claims 1 to 3, wherein
a plate thickness of a portion of the stator core between the predetermined position and the radially outer edge decreases toward the radially outer edge.

5. The rotary electric machine according to any one of claims 1 to 4, wherein
mechanical strength of the steel sheet of the stator core is lower than mechanical strength of the steel sheet of the rotor core.

6. The rotary electric machine according to any one of claims 1 to 5, wherein
magnetic permeability of the steel sheet of the rotor core is higher than magnetic permeability of the steel sheet of the stator core.

7. The rotary electric machine according to any one of claims 1 to 6, wherein
a plate surface of the steel plate of the rotor core has an insulating layer (502),
a plate surface of the steel plate of the stator core has an insulating layer, and
a total thickness of the insulating layer of the rotor core is smaller than a total thickness of the insulating layer of the stator core.

8. The rotary electric machine according to any one of claims 1 to 7, further comprising
a housing accommodating the rotor and the stator core, wherein
the housing accommodates a cooling fluid inside together with the rotor and the stator core, and
the rotor and the stator core are installed in the housing so that the cooling fluid is flowable on an outer peripheral surface of the stator core.

9. The rotary electric machine according to any one of claims 1 to 7, further comprising
a cooling jacket (70) arranged at an outer periphery of the stator core and including a flow portion through which a cooling fluid flows.

10. The rotary electric machine according to any one of claims 1 to 9, wherein
a plate surface of the steel plate of the rotor core has an insulating layer,
a plate surface of the steel plate of the stator core has an insulating layer, and
a thickness of the insulating layer of the steel plate of the rotor core is smaller than a thickness of the insulating layer of the steel plate of the stator core.

11. The rotary electric machine according to any one of claims 1 to 9, wherein
a plate surface of the steel plate of the rotor core has an insulating layer,
a plate surface of the steel plate of the stator core has an insulating layer, and
a thickness of the insulating layer of the steel plate of the stator core is smaller than a thickness of the insulating layer of the steel plate of the rotor core.
